Europäisches Patentamt

European Patent Office

Office européen des brevets

(11) Veröffentlichungsnummer: **0 216 308**

**A2**

# (12) EUROPÄISCHE PATENTANMELDUNG

(21) Anmeldenummer: **86112868.4**

(51) Int. Cl.⁴: **G06F 15/332**

(22) Anmeldetag: **17.09.86**

(30) Priorität: **20.09.85 DE 3533631**

(43) Veröffentlichungstag der Anmeldung:
**01.04.87 Patentblatt 87/14**

(84) Benannte Vertragsstaaten:
**CH DE FR GB IT LI SE**

(71) Anmelder: **Siemens Aktiengesellschaft Berlin und München**
**Wittelsbacherplatz 2**
**D-8000 München 2(DE)**

(72) Erfinder: **Ritter, Gerhard, Dipl.-Ing.**
**Mühlweg 1**
**D-8911 Thaining(DE)**

(54) **Schaltungsanordnung für Fast-Fourier-Transformation.**

(57) Bei der Fast-Fourier-Transformation von Radar-Echosignalen in einem Prozessor nach einer unter der Bezeichnung "Butterfly" bekannten Rechenvorschrift werden ein interner Speicher des Prozessors und ein weiterer als Arbeitsspeicher dienender wechselnder Teilspeicher eines mehrteiligen Zwischenspeichers verwendet. Je ein weiterer Teilspeicher des Zwischenspeichers dient der Aufnahme der Echos eines Entfernungstores sowie der Aufnahme und Weitergabe in den Frequenzbereich transformierter Echos an eine Schwellensteuerung. Nach Verarbeitung der gespeicherten Echos werden die Teilspeicher zyklisch vertauscht.

EP 0 216 308 A2

### Schaltungsanordnung zur Fast-Fourier-Transformation

Die Erfindung bezieht sich auf eine Schaltungsanordnung zur Fast-Fourier-Transformation, insbesondere für Radargeräte, unter Verwendung einer unter der Bezeichnung "Butterfly" bekannten Rechenvorschrift.

Die Fast-Fourier-Transformation ermöglicht bei der Signalverarbeitung in Radargeräten einerseits eine kohärente Integration dopplerverschobener Echos und zum anderen eine genauere Analyse der Echos durch die Darstellung im Frequenzbereich. Die Anwendung dieser vorteilhaften Transformation ist jedoch wegen einer oft zu geringen Verarbeitungsgeschwindigkeit, die einen erheblichen Aufwand zur Erreichung einer Echtzeitverarbeitung bedingen würde, auf wenige Ausnahmefälle beschränkt.

Der FFT-Algorithmus reduziert die Berechnung der diskreten Fourier-Transformation (DFT) auf eine unter der Bezeichnung "Butterfly" bekannte Rechenvorschrift. Diese ist in $1d(N)$ Durchläufen $N/2$ mal mit unterschiedlichen Koeffizienten D durchzuführen, um eine Anzahl N komplexe Abtastwerte im Zeitbereich in ein komplexes Spektrum mit N Stützwerten zu transformieren. Diese Rechenvorschrift sagt aus, daß ein Vektor $\underline{B}$ um einen Winkel $-\phi$ zu drehen ist, der dann zu einem Vektor $\underline{A}$ addiert bzw. vom Vektor $\underline{A}$ subtrahiert wird. Als Ergebnis werden aus zwei Eingangsvektoren zwei neue Vektoren gewonnen:

$$\underline{A}' = \underline{A} + e^{-j\phi} \cdot \underline{B}$$

$$\underline{B}' = \underline{A} - e^{-j\phi} \cdot \underline{B}$$

Die Vektoren A und B werden für die weitere Bearbeitung nicht mehr benötigt. Dieses bedeutet, daß die neu berechneten Vektoren A' und B' in den Speicherplätzen für die Vektoren A und B abgelegt werden können. Bei der Realisierung wird daher nur ein Speicher benötigt, der die N komplexen Abtastwerte im Zeitbereich aufnehmen kann. Die Verarbeitungsgeschwindigkeit bei der Berechnung eines Butterflys ist bei einer derartigen Ausgestaltung erheblich begrenzt, da insgesamt vier Speicherzyklen notwendig sind, um aus dem Speicher zwei Vektoren zu nehmen und die beiden neu berechneten Vektoren wieder abzulegen.

Der Erfindung liegt die Aufgabe zugrunde, bei einer Schaltungsanordnung der eingangs genannten Art die Verarbeitungsgeschwindigkeit bei der Berechnung eines Butterflys zu verbessern. Gemäß der Erfindung wird diese Aufgabe dadurch gelöst, daß für die Durchführung der Fast-Fourier-Transformation zwei Speicher vorgesehen sind, von denen einer ein interner Speicher des FFT-Prozessors ist und ein anderer aus jeweils einem Teilspeicher eines mehrteiligen Zwischenspeichers besteht und als Arbeitsspeicher des FFT-Prozessors dient und daß wenigstens je ein weiterer Teilspeicher des Zwischenspeichers der Aufnahme der Echos eines Entfernungstores sowie der Aufnahme und Weitergabe bereits in den Frequenzbereich transformierter Echos an eine Schwellensteuerung dient und daß ferner die Teilspeicher nach Verarbeitung der gespeicherten Echos zyklisch vertauscht werden.

Durch die Verwendung von zwei Speichern kann die minimale Zyklenzahl zur Berechnung eines Butterflys auf zwei reduziert werden, da bei jedem Durchlauf jeweils aus einem der Speicher die Vektoren gelesen und gleichzeitig in den zweiten Speicher die neuen Vektoren eingeschrieben werden. Die Verringerung der Speicherzyklen von vier auf zwei erhöht die Verarbeitungsgeschwindigkeit und vermindert gleichzeitig den für die Echtzeitverarbeitung erforderlichen Aufwand.

Die arithmetische Einheit im FFT-Prozessor ist auf die Zwei-Speicher-Architektur abgestimmt, so daß die Berechnung eines Butterflys innerhalb der beiden Zyklen durchgeführt werden kann. Dabei werden die notwendigen Einzelberechnungen in einzelne Rechenschritte aufgespalten, die eine möglichst kleine Zykluszeit zulassen.

Gemäß einer vorteilhaften Weiterbildung ist die arithmetische Einheit außerdem so ausgebildet, daß sie das der eigentlichen FFT-Verarbeitung vorgeschaltete Wichten der Eingangsdaten zur Erzielung niedriger Nebenzipfel ebenfalls durchführen kann. Alle dazu benötigten Koeffizienten, Winkelfunktionen und Wichtungsfaktoren sind in zwei Festspeichern abgelegt. Der Ablauf der Verarbeitung ist mikroprogrammgesteuert, so daß alle benötigten Adressen zur Steuerung der beiden Speicher und der Koeffizienten-Festspeicher und die Steuersignale für jeden Maschinenzyklus in einem Festspeicher entsprechender Wortbreite abgelegt sind. Die Steuerung übernimmt ein Sequenzer. Dabei können wahlweise verschiedene Pulszahlen verarbeitet werden. Gemäß einer vorteilhaften Weiterbildung lassen sich verschiedene Wichtungsfunktionen ebenfalls wahlweise verwenden.

Die Erfindung und weitere Einzelheiten der Erfindung wird anhand einer Figur beispielhaft erläutert, die ein Blockschaltbild für die FFT-Verarbeitung von Radardaten darstellt.

Aus einem nicht dargestellten Quadraturdetektor mit nachfolgenden Analog-Digital-Wandlern und einer Vorverarbeitung werden die Radardaten in einem I-und einem Q-Kanal an den Eingang eines Umsortierspeichers USP geführt, der eingangsseitig eine Schreiblogik und ausgangsseitig eine Leselogik aufweist. Das Radargerät liefert für jeden Sendepuls die Echos aller Entfernungstore. Für die FFT-Verarbeitung wird jedoch entfernungstorweise ein Block kohärent zu verarbeitender Echos benötigt, die danach in den Frequenzbereich transformiert werden. Dieser Umsortiervorgang ist Aufgabe des Umsortierspeichers USP. In diesem Speicher werden zunächst die Echos aller Entfernungstore eingeschrieben, bis die Anzahl der kohärent zu verarbeitenden Echos aufgelaufen ist. Dieser Block wird dann entfernungstorweise ausgelesen. Während des Auslesens wird bereits der nächste Block von kohärent zu verarbeitenden Echos eingeschrieben. Neben dieser burstweisen Betriebsart kann der Umsortierspeicher bei entsprechender Ausgestaltung auch eine überlappende Betriebsweise zulassen. Dabei werden Blöcke aus N Echos jeweils mit einem Versatz von N/2 ausgelesen, so daß sich eine Verdopplung der Ausleserate gegenüber der Einschreiberate ergibt. Der Umsortierspeicher enthält eine mikroprogrammierte Ablaufsteuerung, die die beiden Betriebsraten und die Realisierung unterschiedlicher Blockgrößen in bezug auf die Anzahl der kohärent verarbeiteten Echos und der Anzahl der Entfernungstore ermöglicht.

Über die Leselogik ist der Umsortierspeicher USP mit einem Zwischenspeicher ZSP verbunden. Der Zwischenspeicher ZSP ist als Arbeitsspeicher für den FFT-Prozessor P eingesetzt und dient außerdem der Elimination der Zeiten für die Datentransfers vom Umsortierspeicher zum FFT-Prozessor, und vom FFT-Prozessor zu einem nachfolgenden Schaltungsteil z.B. zur Schwellenbildung. Der Zwischenspeicher ZSP besteht aus drei einzelnen Teilspeichern, von denen jeweils ein Teilspeicher dem Einschreiben der Echos eines Entfernungstores dient. In einem zweiten Teilspeicher werden die Echos des vorhergehenden Entfernungstores vom FFT-Prozessor P verarbeitet, während aus dem dritten Teilspeicher das bereits in den Frequenzbereich transformierte Ergebnis des wiederum vorhergehenden Entfernungstores ausgelesen und an die nachfolgende Schaltung SST übergeben wird. Nach Verarbeitung der Echos eines Entfernungstores werden die Teilspeicher jeweils zyklisch vertauscht.

Ein wesentliches Merkmal der FFT-Verarbeitung beruht auf der Anwendung der Zwei-Speicher-Architektur. Einer dieser Speicher ist jeweils ein Teilspeicher des Zwischenspeichers ZSP, während der zweite Speicher ISP ein interner Speicher des FFT-Prozessors ist. Daraus resultiert eine verkürzte Berechnung eines Butterflys in zwei Zyklen.

Der über den Zwischenspeicher ZSP mit dem Umsortierspeicher USP und mit einer nachfolgenden nicht dargestellten Schaltung verbundene FFT-Prozessor weist außer dem internen Speicher ISP eine arithmetische Einheit AE und eine Ablaufsteuerung STA auf. Die arithmetische Einheit ist so ausgelegt, daß sie auch das Wichten der Eingangsdaten übernehmen kann. Die Verarbeitung wird durch die mikroprogrammierte Ablaufsteuerung STA kontrolliert.

Die Verarbeitungsgeschwindigkeit, die vom FFT-Prozessor verarbeitet werden kann, hängt von der Anzahl der Prozessoren ab. Für schnellere Entfernungstortakte können mehrere FFT-Prozessoren mit Zwischenspeichern jeweils parallel geschaltet werden.

Bezugszeichenliste

I = I-Kanal
Q = Q-Kanal
USP = Umsortierspeicher
ZSP = Zwischenspeicher
P = FFT-Prozessor
ISP = Speicher des FFT-Prozessors
AE = Arithmetische Einheit
STA = Ablaufsteuerung
SST = Schwellensteuerung

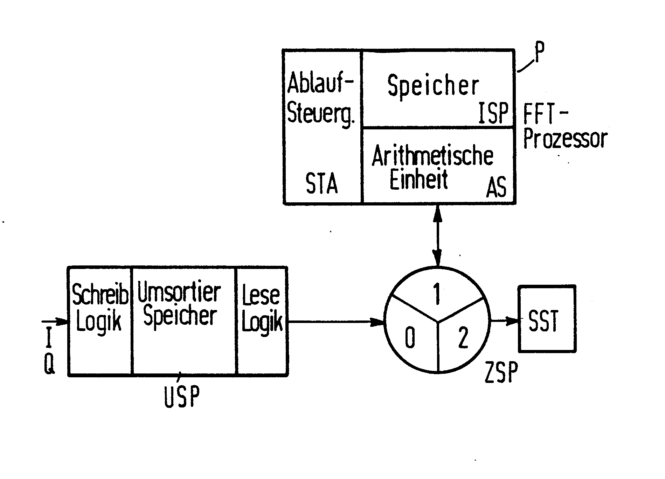

Ansprüche

1. Schaltungsanordnung zur Fast-Fourier-Transformation, insbesondere für Radargeräte, unter Verwendung eines unter der Bezeichnung "Butterfly" bekannten Rechenvorschrift, **dadurch gekennzeichnet**, daß für die Durchführung der Fast-Fourier-Transformation zwei Speicher vorgesehen sind, von denen einer ein interner Speicher - (ISP) des FFT-Prozessors ist und ein anderer aus jeweils einem Teilspeicher eines mehrteiligen Zwischenspeichers (ZSP) besteht und als Arbeitsspeicher des FFT-Prozessors (P) dient und daß wenigstens je ein weiterer Teilspeicher des Zwischenspeichers (ZSP) der Aufnahme der Echos eines Entfernungstores sowie der Aufnahme und Weitergabe bereits in den Frequenzbereich transformierter Echos an eine Schwellensteuerung - (SST) dient und daß ferner die Teilspeicher nach Verarbeitung der gespeicherten Echos zyklisch vertauscht werden.

2. Schaltungsanordnung nach Anspruch 1, **dadurch gekennzeichnet**, daß im FFT-Prozessor (P) eine arithmetische Einheit (AE) vorgesehen und so bemessen ist, daß die Berechnung eines "Butterflys" in zwei Zyklen durchführbar ist.

3. Schaltungsanordnung nach Anspruch 1 oder 2, **dadurch gekennzeichnet**, daß die arithmetische Einheit (AE) so ausgebildet ist, daß sie das der FFT-Verarbeitung vorgeschaltete Wichten der Eingangsdaten übernimmt.

4. Schaltungsanordnung nach Anspruch 3, **dadurch gekennzeichnet** , daß die für das Wichten erforderlichen Koeffizienten, Winkelfunktionen und Wichtungsfaktoren in vorzugsweise zwei Festspeichern mit wahlfreiem Zugriff abgelegt sind.

5. Schaltungsanordnung nach einem der vorhergehenden Ansprüche, **dadurch gekennzeichnet,** daß der Ablauf der Verarbeitung durch eine im FFT-Prozessor (P) angeordnete mikroprogrammierte Ablaufsteuerung (STA) gesteuert ist.

6. Schaltungsanordnung nach einem der vorhergehenden Ansprüche, **dadurch gekennzeichnet,** daß für die Abwicklung schnellerer Entfernungstortakte mehrere FFT-Prozessoren parallel geschaltet sind.